## Europäisches Patentamt

## European Patent Office

## Office européen des brevets

(19)

(11) Veröffentlichungsnummer: **0 043 571**
**B1**

(12) **EUROPÄISCHE PATENTSCHRIFT**

(45) Veröffentlichungstag der Patentschrift:
**18.12.85**

(51) Int. Cl.⁴: **G 06 K 9/62**

(21) Anmeldenummer: **81105181.2**

(22) Anmeldetag: **03.07.81**

(54) Schaltungsanordnung zur maschinellen Zeichenerkennung.

(30) Priorität: **09.07.80 DE 3026055**

(43) Veröffentlichungstag der Anmeldung:
**13.01.82 Patentblatt 82/2**

(45) Bekanntmachung des Hinweises auf die Patenterteilung:
**18.12.85 Patentblatt 85/51**

(84) Benannte Vertragsstaaten:
**AT BE CH FR GB IT LI NL SE**

(56) Entgegenhaltungen:
**DE - A - 2 456 210**
**DE - A - 2 817 341**
**US - A - 3 182 290**

(73) Patentinhaber: **COMPUTER GESELLSCHAFT KONSTANZ MBH, Max-Stromeyer-Strasse 116, D-7750 Konstanz (DE)**

(72) Erfinder: **Kochert, Wilfried, Gaussweg 14, D-7750 Konstanz (DE)**

(74) Vertreter: **Mehl, Ernst, Dipl.-Ing. et al, Postfach 22 01 76, D-8000 München 22 (DE)**

EP 0 043 571 B1

**Beschreibung**

Die Erfindung bezieht sich auf eine Schaltungsanordnung zur maschinellen Zeichenerkennung gemäss dem Oberbegriff des Patentanspruchs 1. Eine Schaltungsanordnung dieser Art ist aus der DE-A-2 817 341 bekannt.

In der modernen Datentechnik gewinnt die maschinelle Zeichenerkennung im Zusammenhang mit der Datenerfassung und Dateneingabe zunehmend an Bedeutung. Im Interesse geringer Substitutions- und Rückweisungsraten werden dabei an die Erkennungssicherheit hohe Anforderungen gestellt. Für eine sichere Zeichenerkennung ist es deshalb notwendig, dass nicht nur die charakteristischen Merkmale des zu klassifizierenden Zeichens im Hinblick auf die Zugehörigkeit zu einer bestimmten Zeichenklasse bewertet werden, sondern auch seine charakteristischen Unterschiede zu den Repräsentanten aller anderen Zeichenklassen. Bei einem zu erkennenden Zeichensatz von ca. 10 Zeichen, z.B. für die Ziffern 0 bis 9, ist dies, insbesondere bei Anwendung der Norm-Schriftarten OCR A und OCR B, noch relativ einfach. Wird dagegen der von jeweils einem Klassifikator auszuwertende Zeichensatz erhöht, dann werden die Klassifizierungsergebnisse in Abhängigkeit von der Gesamtzahl der zu unterscheidenden Zeichen etwa quadratisch schlechter, d.h. eine Klassifizierung von z.B. 30 Zeichenklassen ergibt etwa um den Faktor 9 schlechtere Werte der die Qualität der Erkennung kennzeichnender Grössen als eine Klassifizierung von nur 10 Zeichenklassen. Ausserdem ergeben sich bei Anwendung eines nicht linearen Klassifikatorsystems hinsichtlich des zeitlichen Aufwandes nicht unerhebliche Probleme, weil für die Berechnung der für die Erkennung der einzelnen Zeichen notwendigen Klassifikatorwerte ca. 500 bis 1000 Rechenschritte pro Zeichenklasse erforderlich sind. Da dies zu Lasten der Lesegeschwindigkeit geht, müsste die Rechenarbeit notwendigerweise auf mehrere Rechenwerke verteilt werden, was den Schaltungsaufwand und damit auch den Preis der Klassifikatoreinrichtung empfindlich erhöhen würde.

Aus der US-A-3 182 290 ist ein Zeichenerkennungssystem bekannt, bei dem die Gesamtheit der Zeichenklassen in mehrere Gruppen aufgeteilt und jede Gruppe getrennt ausgewertet wird. Die Aufteilung der Zeichenklassen in die einzelnen Gruppen erfolgt dabei zweckmässig in der Weise, dass untereinander sehr ähnliche Zeichen in je einer Gruppe zusammengefasst werden, wobei innerhalb jeder Gruppe jeweils ein Grobklassifikator die Bildpunkte einer Gesamtmatrix auswertet, während parallel dazu in einem Feinklassifikator die jeweiligen Unterschiede innerhalb dieser Zeichengruppe mit Hilfe von Bildpunkten einer Submatrix ermittelt werden. Die jeweiligen Teilsignale von Grobklassifikator und Feinklassifikator werden schliesslich zu einzelnen Ergebnissignalen für jeweils eine Zeichenklasse innerhalb der Gruppe verknüpft.

Aus der DE-A-2 456 210 ist ferner ein Verfahren zur gestuften Erkennung von Mustern bekannt, bei dem wenigstens zwei in Serie geschaltete Klassifikatoren vorgesehen sind, die jeweils alle Zeichenklassen umfassen und von Stufe zu Stufe eine ansteigende Anzahl von Klassifikationsmerkmalen aufweisen. Die Zeichenerkennung erfolgt hier in der Weise, dass das zu erkennende Zeichen dem ersten Klassifikator zugeführt wird, der lediglich eine Untermenge von maximal möglichen Klassifikationsmerkmalen auswertet. Sofern dieser erste, alle Zeichenklassen umfassende Klassifikator bereits ein plausibles Ergebnis liefert, ist der Erkennungsprozess für dieses Zeichen beendet. Im anderen Fall wird das Zeichenmuster einem zweiten Klassifikator für ebenfalls alle Zeichenklassen zugeführt, der aber im Vergleich zum ersten Klassifikator eine höhere Anzahl von Klassifikationsmerkmalen aufweist. Sollte auch dieser zweite Klassifikator kein eindeutiges Ergebnis liefern, sind weitere Klassifikatorstufen mit jeweils erhöhter Anzahl von Klassifikationsmerkmalen denkbar. Charakteristisch für dieses bekannte Klassifizierungsverfahren ist jedenfalls, dass in jeder Klassifikatorstufe alle Zeichenklassen ausgewertet werden. Ausserdem besitzt jede Klassifikatorstufe ein eigenes Rechenwerk.

Der vorliegenden Erfindung liegt nun die Aufgabe zugrunde, eine Schaltungsanordnung zur maschinellen Zeichenerkennung anzugeben, mit der auch bei erhöhter Zeichenklassenzahl eine ausreichend hohe Lesesicherheit erreicht werden kann, ohne dass der schaltungstechnische Aufwand entsprechend gesteigert werden muss.

Diese Aufgabe wird erfindungsgemäss mit den im kennzeichnenden Teil des Patentanspruchs 1 beschriebenen Merkmalen gelöst. Der Vorteil eines derart aufgebauten Stufenklassifikators liegt vor allem darin, dass er im Vergleich zu einem Gesamtklassifikator für die Klassifizierung eines Zeichens sehr viel weniger Rechenaufwand erfordert. Während nämlich ein bekannter Klassifikator für beispielsweise 39 Zeichenklassen entsprechend 39 Schätzwerte errechnen müsste, sind bei einer erfindungsgemässen Stufenklassifikator-Einrichtung mit einem Gruppenklassifikator und drei Teilklassifikatoren für z.B. jeweils 13 Zeichenklassen nur drei Schätzwerte im Gruppenklassifikator und 13 Schätzwerte in jeweils einem der Teilklassifikatoren, also insgesamt nur 16 Schätzwerte zu errechnen.

Vorteilhafte Weiterbildungen der Erfindung sind in den Unteransprüchen angegeben.

Im folgenden wird ein Ausführungsbeispiel der Erfindung anhand der Zeichnung näher erläutert. Dabei zeigen:

Fig. 1 den prinzipiellen Aufbau (Blockschaltbild) eines Stufenklassifikators gemäss der Erfindung

Fig. 2 Einzelheiten der Schaltungsanordnung gemäss Fig. 1.

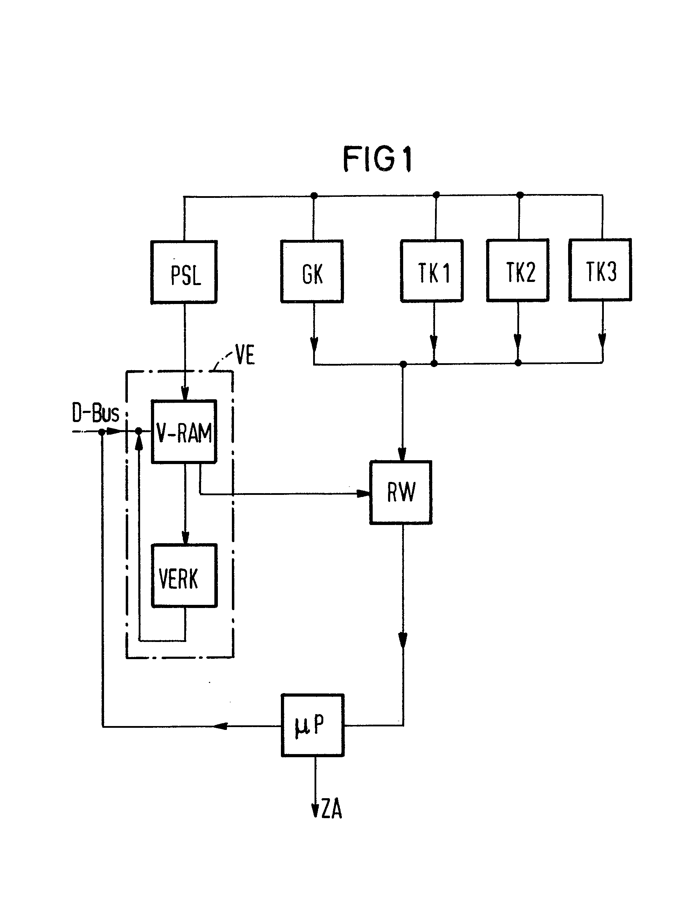

Die Fig. 1 zeigt eine Klassifikatoreinrichtung mit einem Gruppenklassifikator GK und drei Teilklassifikatoren TK1 bis TK3, die sternförmig mit einem allen Klassifikatoren gemeinsamen Rechenwerk RW verbunden sind. Sowohl der Gruppenklassifikator GK als auch die Teilklassifikatoren TK1, 2, 3 sind vorzugsweise quadratische Polynomklassifikatoren, bei denen die Klassenzugehörigkeit eines Zeichenmusters durch eine berechnete Schätzwertfunktion ausgedrückt wird. Die Klassifikatoreinrichtung weist ferner eine Verknüpfungseinheit VE mit einem Merkmalspeicher V-RAM auf, in welchem ein über einen Daten-Bus (D-BUS) übertragenes Bitmuster eines vorher aufbereiteten Zeichens einspeicherbar ist. Die für die Zeichenerkennung notwendigen Verknüpfungsadressen sind in einem Festwertspeicher PSL eines allen Klassifikatoren gemeinsamen Klassifikatorspeichers gespeichert, der von einem Adresszähler angesteuert wird. Die Zeichenerkennung erfolgt nun in der Weise, dass die aus dem Merkmalspeicher V-RAM gelesenen Merkmale dem Verknüpfungsbaustein VERK zugeführt werden. Die in dem Verknüpfungsbaustein VERK durchgeführte Merkmalsverknüpfung erfolgt dabei in der Weise, dass sich immer dann eine «1» ergibt, wenn der Inhalt der beiden zu einer Verknüpfung gehörenden Adressen «1» ist, während sich in den übrigen Fällen eine «0» ergibt. Diese Verknüpfungsergebnisse werden seriell in einen speziell dafür vorgesehenen Adressbereich des V-RAMs eingespeichert.

Mit diesen vorab gebildeten und abgespeicherten Verknüpfungen werden nun im Rechenwerk RW mit Hilfe der dem Gruppenklassifikator zugeordneten Klassifikatorkoeffizienten sogenannte Schätzwerte errechnet, die das abgetastete Zeichen zunächst nur einer von n Zeichengruppen zuordnen. Diese ersten Schätzwerte werden anschliessend einem Mikroprozessor µP zugeführt, dessen Aufgabe neben verschiedenen anderen Aufgaben innerhalb der Zeichenerkennungsschaltung darin besteht, aufgrund der vom Gruppenklassifikator vorgenommenen Zeichengruppen-Zuordnung den jeweils entsprechenden Teilklassifikator TK1 oder TK2 oder TK3 auszuwählen. Anhand der für jeden Teilklassifikator spezifischen Klassifikatorkoeffizienten werden dann die für das jeweils auszuwertende Zeichen charakteristischen zweiten Schätzwerte errechnet und an den Mikroprozessor µP weitergegeben, an dessen Ausgang dann die Zeichenausgabe ZA erfolgt.

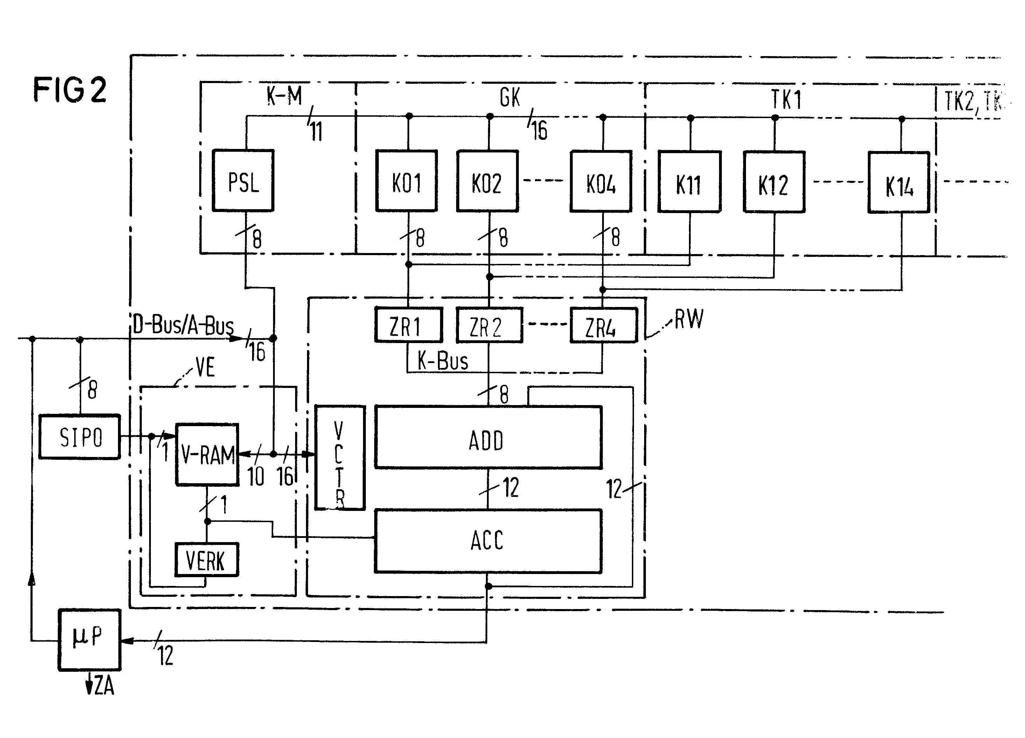

Weitere Einzelheiten der Schaltung gemäss Fig. 1, bestehend aus der Verknüpfungseinheit VE, dem Rechenwerk RW, dem Klassifikatorspeicher K-M und dem Mikroprozessor µP sind in Fig. 2 dargestellt. Der Klassifikatorspeicher K-M enthält neben dem bereits erwähnten Festwertspeicher PSL mehrere Teilspeicher, in denen die Klassifikatorkoeffizienten der einzelnen Klassifikatoren gespeichert sind. Die Teilspeicher K01, K02 ... K04 sind dabei dem Gruppenklassifikator GK zugeordnet, während die Teilspeicher K11, K12 ... K14 dem ersten Teilklassifikator TK1 und die aus Platzgründen in der Zeichnung nicht dargestellten weiteren Teilspeicher-Vierergruppen den Teilklassifikatoren TK2 und TK3 zugeordnet sind. Die Aufteilung der jeweils einem Klassifikator, d.h. einer Teilspeicher-Vierergruppe zugeordneten Koeffizienten ist dabei zweckmässig so getroffen, dass sich der erste Koeffizient der ersten Zeichenklasse im ersten Teilspeicher, der zweite im zweiten Teilspeicher usw. und der fünfte dann wieder im ersten Teilspeicher befindet. Insgesamt hat jede Zeichenklasse beispielsweise 764 Koeffizienten. Die Anordnung der Koeffizienten in den einzelnen Teilspeicher-Vierergruppen ermöglicht es, die Schätzwerte der einzelnen Zeichenklassen in je 764 Rechenschritten nacheinander zu berechnen.

Die Ausgänge der vier, jeweils dem Gruppenklassifikator bzw. den drei Teilklassifikatoren zugeordneten Teilspeicher sind mit jeweils einem Zwischenregister ZR1 ... ZR4 des Rechenwerks RW verbunden, so dass jeweils vier Koeffizienten parallel in diese Zwischenregister übernommen werden können. Diese vier Register werden von einem Adresszähler V-CTR, der auch die einzelnen Teilspeicher adressiert, so angesteuert, dass Tri-State-Ausgänge der einzelnen Register nacheinander durchgeschaltet werden. Damit liegen die Koeffizienten auf dem Klassifikatorbus K-BUS nacheinander an der eigentlichen Rechenschaltung, bestehend aus dem Addierer ADD und dem Akkumulator ACC, an. Die dazugehörigen Verknüpfungen werden gleichzeitig aus dem Merkmalspeicher V-RAM ausgelesen und dem Akkumulator ACC zugeführt. Nur wenn die zugehörige Verknüpfung «1» ist, wird der entsprechende Koeffizient im Akkumulator ACC addiert. Ist der jeweilige Schätzwert einer Zeichengruppe fertig berechnet, so wird er aus dem Akkumulator ACC gelesen und dem Mikroprozessor µP zugeführt, der dann nach Auswertung aller Schätzwerte entweder die Zeichenausgabe ZA veranlasst oder, sofern es sich um ein Zwischenergebnis des Gruppenklassifikators GK handelt, die Auswahl des jeweils zuständigen Teilklassifikators für die endgültige Klassifizierung des Zeichens vornimmt.

**Patentansprüche**

1. Schaltungsanordnung zur maschinellen Zeichenerkennung mit einer, einer Abtast- und Aufbereitungseinheit nachgeschalteten, aus mehreren Klassifikatoren bestehenden Klassifikatoreinrichtung mit folgenden Komponenten:

a) einem Merkmalspeicher (V-RAM) zur Speicherung von jeweils einem abgetasteten und aufbereiteten Zeichen entsprechenden Bitmustern

b) einem Klassifikatorspeicher (K–M) mit einem Festwertspeicher (PSL) für Verknüpfungsadressen zur Verknüpfung der im Merkmalspeicher (V-RAM) enthaltenen Bitmuster und der in einzelnen Teilspeichern K01 ... Knm) des Klassifikatorspeichers (K–M) enthaltenen zugehörigen Klassifikatorkoeffizienten,

c) einem Rechenwerk (RW), das aus den im Merkmalspeicher (V–RAM) gespeicherten Bitmustern und den mit ihnen jeweils verknüpften, in den Teilspeichern (K01 ... Knm) des Klassifikatorspeichers (K–M) enthaltenen Klassifikatorkoeffizienten sogenannte, einzelnen Zeichenklassen innerhalb eines Zeichenvorrats zugeordnete erste und zweite Schätzwerte errechnet, und

d) einem Mikroprozessor-System zur Bestimmung der jeweiligen Zeichenklasse anhand der ermittelten zweiten Schätzwerte,
dadurch gekennzeichnet, dass eine erste Menge der Teilspeicher (K01 ... K04) des Klassifikatorspeichers (K–M) zu einem Gruppenklassifikator (GK) gehört, dessen Klassifikatorkoeffizienten so gewählt sind, dass jedes abgetastete und aufbereitete Zeichen aufgrund der errechneten ersten Schätzwerte jeweils einer von n Gruppen zugeordnet wird, dass für jede der n Gruppen je ein jeweils in Abhängigkeit von den ersten Schätzwerten ansteuerbarer, jeweils unterschiedlichen Z/n Zeichenklassen zugeordneter Teilklassifikator (TK1 ... TKn) vorgesehen ist, zu dem jeweils eine weitere Menge der Teilspeicher (K11 ... K14, K21 ... K24;..) gehört, dass der Mikroprozessor (µP) aufgrund der spezifischen Klassifikatorkoeffizienten der Teilklassifikatoren (TK1 ... TKn) und der daraus errechenbaren zweiten Schätzwerte in der Weise angesteuert wird, dass er einerseits ein das jeweils zu erkennende Zeichen definierendes Ausgangssignal (ZA) und anderseits ein Steuersignal für den Gruppenklassifikator (GK) zur Auswertung eines neuen Zeichen-Bitmusters liefert, und dass der Gruppenklassifikator (GK) einerseits und je einer der Teilklassifikatoren (TK1 ... TKn) anderseits alternierend an das gemeinsame Rechenwerk (RW) anschaltbar sind.

2. Schaltungsanordnung nach Anspruch 1, dadurch gekennzeichnet, dass die Aufteilung der Zeichenklassen durch den Gruppenklassifikator (GK) und die der Klassifikatorkoeffizienten auf die einzelnen Teilklassifikatoren (TK1 ... TKn) so gewählt ist, dass Zeichen, die viele charakteristische Merkmale gemeinsam haben und die sich durch wenige charakteristische Merkmale voneinander unterscheiden, gleichen Teilklassifikatoren zugeordnet sind.

3. Schaltungsanordnung nach Anspruch 1 oder 2, dadurch gekennzeichnet, dass für den Gruppenklassifikator (GK) und sämtliche Teilklassifikatoren (TK1 ... TKn) jeweils mehrere als Festwertspeicher ausgebildete und Klassifikatorkoeffizienten aufnehmende Teilspeicher (K01 ... K0m, K11 ... K1m, ..., Kn1 ... Knm) zugeordnet sind, in denen die einzelnen Koeffizienten derart abgespeichert sind, dass sich der erste Koeffizient einer ersten Zeichenklasse im ersten Teilspeicher, der zweite im zweiten, der m–te im m–ten Teilspeicher und der m + l–te Koeffizient wieder im ersten Teilspeicher, usw. befindet.

4. Schaltungsanordnung nach Anspruch 3, dadurch gekennzeichnet, dass der Festwertspeicher (PSL) für Verknüpfungsadressen und die den einzelnen Klassifikatoren zugeordneten Teilspeicher (K01 ... Knm) durch einen Adresszähler (V–CTR) gesteuert sind.

5. Schaltungsanordnung nach Anspruch 3 oder 4, dadurch gekennzeichnet, dass der Merkmalspeicher (V–RAM) über einen Serien-Parallel-Wandler (SIPO) mit einem die Merkmalsdaten übertragenden Datenbus (D–BUS) verbunden ist.

6. Schaltungsanordnung nach einem der Ansprüche 3 bis 5, dadurch gekennzeichnet, dass die Ausgänge der den einzelnen Klassifikatoren (GK, TK1 ... TKn) zugeordneten Teilspeicher (K01 ... K0m, ... Kn1 ... Knm) parallel mit jeweils m Zwischenregistern (ZR1 ... ZRm) des gemeinsamen Rechenwerks (RW) verbunden sind, die mit taktgesteuerten Tri-State-Ausgängen gemeinsam an einen Klassifikator-Bus (K-BUS) angeschlossen sind, so dass jeweils m Klassifikatorkoeffizienten parallel auslesbar und seriell an der Rechenschaltung (ADD, ACC) des Rechenwerks (RW) anliegen.

**Claims**

1. A circuit arrangement for mechanical character recognition, with a classifier device which is connected to the output end of a sampling and preparation unit and which comprises a plurality of classifiers, with the following components:

a) a feature store (V–RAM) which serves to store bit patterns, each of which corresponds to a sampled and prepared character;

b) a classifier store (K–M) having a ROM (PSL) for logic-link addresses for the logic-linking of the bit patterns stored in the feature store (V–RAM) and the associated classifier coefficients which are contained in individual sub-stores (K01 ... Knm) of the classifier store (K–M),

c) a calculating unit (RW) which, from the bit patterns stored in the feature store (V–RAM) and from the classifier coefficients which are logic-linked thereto and are contained in the sub-stores (K01 ... Knm) of the classifier store (K–M) calculates so-called first and second estimated values which are assigned to individual character classes within a character supply, and

d) a microprocessor system which serves to determine the character class in question on the basis of the determined second estimated values, characterised in that a first quantity of the sub-stores (K01 ... K04) of the classifier store (K–M) forms part of a group classifier (GK) whose classifier coefficients are selected to be such that each sampled and prepared character is assigned to one of n groups on the basis of the calculated first estimated values, that for each of the n groups there is provided a sub-classifier (TK1 ... TKn) which can be driven in dependence upon the first estimated values and is assigned to different Z/n character classes and which is itself assigned a further quantity of sub-stores (K11 ... K14, K21 ... K24;..), that the microprocessor (µP) is driven on the basis of the specific classifier coefficients of the sub-classifiers (TK1 ... TKn) and the second estimated values which can be calculated therefrom, in such manner that on the one hand it supplies an output signal (ZA) which defines the particular character which is to be recognised and on the other hand it supplies a control signal for the group classifier (GK) for the analysis of a new character bit pattern, and that the group classifier (GK) on the one hand and in each case one of the sub-classifiers (TK1 ... TKn) on the other hand can be alternately connected to the common calculating unit (RW).

2. A circuit arrangement as claimed in claim 1, characterised in that the division of the character classes by the group classifier (GK) and that of the classifier coefficients amongst the individual sub-classifiers (TK1 ... TKn) is selected to be such that characters which have many characteristic features in common and which differ from one another by a small number of characteristic features are assigned to the same sub-classifiers.

3. A circuit arrangement as claimed in claim 1 or 2, characterised in that for the group classifier (GK) and all the sub-classifiers (TK1 ... TKn) there are allocated a plurality of sub-stores (K01 ... K0m, K11 ... K1m, Kn1 ... Knm) which are designed as ROMs and which accomodate classifier coefficients and in which the individual coefficients are stored in such manner that the first coefficient of a first class of characters is contained in the first sub-store, the second is contained in the second sub-store, the m-th in the m-th sub-store, and the m + 1 -th coefficient is again contained in the first sub-store etc.

4. A circuit arrangement as claimed in claim 1, characterised in that the ROM (PSL) for logic-link addresses, and the sub-stores (K01 ... Knm) which are assigned to the individual classifiers are controlled by an address counter (V–CTR).

5. A circuit arrangement as claimed in claim 3 or 4, characterised in that the feature store (V–RAM) is connected via a series-parallel converter (SIPO) to a data bus (D–BUS) which serves to transfer the items of feature data.

6. A circuit arrangement as claimed in one of the claims 3 to 5, characterised in that the outputs of the sub-stores (K01 ... K0m, ... Kn1 ... Knm), which are assigned to the individual classifiers (GK, TK1 ... TKn) are connected in parallel to in each case m intermediate registers (ZR1 ... ZRm) of the common calculating unit (RW), which intermediate registers are commonly connected by clock-pulse-controlled tri-state outputs to a classifier bus (K–BUS), so that in each case m classifier coefficients can be read in parallel and are applied in serial fashion to the calculating circuit (ADD, ACC) of the calculating unit (RW).

## Revendications

1. Montage pour la reconnaissance automatique de caractères avec un dispositif à classificateurs constitué par plusieurs classificateurs et monté en aval d'un dispositif de balayage et d'édition, avec les composants suivants:

a) une mémoire de caractéristiques (V–RAM) pour mémoriser des configurations binaires dont chacune correspond à un caractère balayé et édité,

b) une mémoire de classificateurs (K–M) avec une mémoire morte (PSL) pour des adresses de connexions pour combiner les configurations binaires contenues dans la mémoire de caractéristiques (V–RAM) et les coefficients des classificateurs associés, contenus dans les différentes mémoires partielles (K01 ... Knm) de la mémoire de classificateurs (K–M),

c) une unité de calcul (RW) qui calcule, à partir des configurations binaires mémorisées dans la mémoire de caractéristiques (V–RAM) et des coefficients de classificateurs contenus dans les mémoires partielles (K01 ... Knm) de la mémoire de classificateurs (K–M) et qui sont respectivement combinés avec eux, ce que l'on désigne par des premières et des secondes valeurs d'estimation associées à des classes individuelles de caractères dans une réserve de caractères,

d) un système à microprocesseur pour déterminer la classe de caractères concernée, à l'aide des secondes valeurs d'estimation déterminées, caractérisé par le fait qu'une première quantité des mémoires partielles (K01 ... K04) de la mémoire de classificateurs (K–M) appartient à un classificateur de groupe (GK) dont les coefficients des classificateurs sont choisis de telle manière que chaque caractère balayé et édité est associé, sur la base des premières valeurs d'estimation calculées, à l'un de n groupes, que pour chacun des n groupes il est prévu un classificateur partiel (TK1 ... TKn) susceptible d'être attaqué en fonction des premières valeurs d'estimation et associé à des classes de caractères différentes (Z/n), classificateur partiel auquel appartient une seconde quantité de mémoires partielles (K11 ... K14, K21 ... K24 ...), que le microprocesseur (µP) est, sur la base du coefficient des classificateurs spécifiques des classificateurs partiels (TK1 ... TKn) et des secondes valeurs d'estimation susceptibles d'être calculées à partir de ceux-ci, attaqué de telle façon qu'il fournit, d'une part, le signal de sortie (ZA) qui définit le caractère à reconnaître, et, d'autre part, un signal de commande pour le classificateur de groupes (GK) pour évaluer une nouvelle configuration binaire de caractère, et que le classificateur de groupes (GK), d'une part, et l'un des classificateurs partiels (TK1 ... TKn) d'autre part, sont susceptibles d'être reliés alternativement à l'unité de calcul commune (RW).

2. Montage selon la revendication 1, caractérisé par le fait que la répartition des classes de caractères par le facteur de classification de groupes (GK) et celle des coefficients de classificateurs sur les différents classificateurs partiels (TK1 ... TKn) est choisie de telle façon que des caractères qui possèdent en commun plusieurs caractéristiques représentatives et qui ne se distinguent entre eux que par un petit nombre de caractéristiques représentatives, sont associés aux mêmes classificateurs partiels.

3. Montage selon la revendication 1 ou 2, caractérisé par le fait que pour le classificateur de groupes (GK) et tous les classificateurs partiels (TK1 ... TKn) sont prévues plusieurs mémoires partielles (K01 ... K0M, K11 ... K1m, ... Kn1 ... Knm) réalisées sous la forme de mémoires mortes et recevant des coefficients de classificateurs, mémoires partielles dans lesquelles les différents coefficients sont mémorisés de telle façon que le premier coefficient d'une première classe de caractères se trouve dans la première mémoire partielle, le second coefficient dans la seconde mémoire partielle, le coefficient de rang m se trouve dans la mémoire partielle d'ordre m et le coefficient d'ordre m + 1 se trouve à nouveau dans la première mémoire partielle, etc.

4. Montage selon la revendication 3, caractérisé par le fait que la mémoire morte (PSL) pour les adresses de combinaisons et les mémoires partielles (K01 ... Knm) qui sont associées aux différents classificateurs, sont commandées par un compteur d'adresses (V–CTR).

5. Montage selon la revendication 3 ou 4, caractérisé par le fait que la mémoire de caractéristiques (V–RAM) est reliée, par un convertisseur série-parallèle (SIPO), avec un bus de données (BUS–D) qui transmet les données des caractéristiques.

6. Montage selon l'une des revendications 3 à 5, caractérisé par le fait que les sorties des mémoires partielles (K01 ... K0m, ... Kn1 ... Knm) qui sont associées aux différents classificateurs (GK, TK1 ... TKn) sont reliées, en parallèle, avec respectivement m registres intermédiaires (ZR1 ... ZRm) de l'unité de calcul commune (RW), qui sont reliées en commun avec des sorties à trois états, commandées en cadence, à un bus-classificateurs (BUS–K) de manière que m coefficients de classificateurs puissent être lus en parallèle et se présenter, de façon sérielle, au niveau du circuit de calcul (ADD, ACC) de l'unité de calcul (RW).

# FIG 1

FIG 2